# EUROPEAN PATENT APPLICATION

(11) **EP 4 262 119 A1**
(43) Date of publication of application: **18.10.2023**
(21) Application number: 20964766.8
(22) Date of filing: 11.12.2020
(51) Int. Cl.: H04L 5/00

(54) **DATA TRANSMISSION METHOD AND APPARATUS, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2020/135876
(87) International publication number: WO 2022/120830

(57) **Abstract**

A data transmission method and apparatus, and a storage medium. The data transmission method comprises: in response to determining that there is an uplink and downlink transmission scheduling conflict on a target time unit, performing downlink data receiving or uplink data sending on the target time unit (101). The problem of uplink and downlink transmission scheduling conflicts in satellite communications can be effectively solved.

## Description

### TECHNICAL FIELD

The disclosure relates to the communication field, in particular to a method for transmitting data, an apparatus for transmitting data, and a storage medium.

### BACKGROUND

In the research of wireless communication technologies, satellite communication is considered to be an important aspect of the future development of the wireless communication technologies. The satellite communication refers to communication performed by wireless communication devices on the ground using satellites as relays. The satellite communication system consists of a satellite portion and a ground portion. Characteristics of the satellite communication include: large communication range, capability of communication between any two points as long as they are within a range covered by the radio waves emitted by the satellite, and capability of being less susceptible to terrestrial hazards (high reliability). The satellite communication, as a supplement to the current terrestrial cellular communication system, has the following benefits. Firstly, the coverage can be extended. For areas that cannot be covered by the current cellular communication system or areas with high coverage costs, such as the ocean, desert, remote mountain areas, or other situations, the communication problems can be solved by the satellite communication. Secondly, emergency communication ca be achieved. For example, in extreme situations such as disasters (e.g., earthquakes) where cellular communications infrastructures are unavailable, the satellite communication can be used to quickly establish communication connections. Thirdly, industry applications can be provided. For example, for latency-sensitive services transmitted over long distance, the satellite communication can be used to reduce the service transmission latency.

It is expected that in the future wireless communication system, the satellite communication system and the terrestrial cellular communication system will gradually achieve deep integration, to truly realize the smart connection of everything.

In current terrestrial communication system, generally, data transmission is based on scheduling. This means that the base station instructs the terminal to send or receive data at the time frequency resource location indicated by a scheduling instruction. In another technique, the base station can pre-configure the resource for the terminal to send or receive data, and the terminal sends or receives data at the corresponding time frequency resource location based on the configuration information.

However, for some terminals, only the half-duplex transmission mode is supported due to the capacities of the terminal. That is, either the downlink data reception or the uplink data transmission is performed within one time unit, and the data reception and the data transmission cannot be performed simultaneously within one time unit. However, in the Non-terrestrial Network (NTN) scenario, since it is limited by the presence of propagation latency, the satellite may not know the timing of the downlink and the timing of the uplink of the terminal accurately, so there may be a situation where the terminal receives both a downlink reception scheduling and an uplink transmission scheduling, which causes the terminal to perform both the uplink transmission and the downlink transmission simultaneously within at least one time unit.

### SUMMARY

To overcome the problems existing in the related art, embodiments of the disclosure provide a method for transmitting data, an apparatus for transmitting data, and a storage medium.

According to a first aspect of embodiments of the disclosure, a method for transmitting data performed by a terminal is provided. The method includes:

performing a downlink data reception or an uplink data transmission within a target time unit in response to determining that there is a conflict between an uplink transmission scheduling and a downlink transmission scheduling within the target time unit.

Optionally, performing the downlink data reception or the uplink data transmission within the target time unit includes:
performing the downlink data reception or the uplink data transmission within the target time unit based on an indication of a target transmission mode.

Optionally, the method further includes:
determining the target transmission mode based on a predefined setting; or
determining the target transmission mode based on a target signaling sent by a satellite.

Optionally, the method further includes:
sending target indication information to a satellite in response to performing the downlink data reception within the target time unit, in which the target indication information is configured to indicate that the terminal does not perform the uplink data transmission within the target time unit;
receiving a first resource for transmitting target uplink data allocated, based on the target indication information, by the satellite to the terminal; and
transmitting the target uplink data to the satellite within a time unit included in the first resource.

Optionally, sending the target indication information to the satellite includes:
sending the target indication information to the satellite via a Physical Random Access Channel (PRACH).

Optionally, the first resource includes a plurality of time units, and transmitting the target uplink data to the satellite within the time unit included in the first resource includes:
determining, based on a predefined manner, at least one first time unit from the plurality of time units included in the first resource; and
transmitting the target uplink data to the satellite within the at least one first time unit.

Optionally, the target uplink data includes first uplink data that is not transmitted by the terminal within the target time unit; or
the target uplink data includes uplink data obtained by combining the first uplink data and second uplink data, in which the second uplink data needs to be sent by the terminal within the time unit included in the first resource.

Optionally, the method further includes:
transmitting target indication information and target uplink data to a satellite within a time unit included in a second resource for performing the uplink data transmission pre-allocated by the satellite to the terminal in response to performing the downlink data reception within the target time unit, the time unit included in the second resource is located after the target time unit, and the target indication information is configured to indicate that the terminal does not perform the uplink data transmission within the target time unit.

Optionally, the second resource includes a resource used by the terminal for performing a random access.

Optionally, the second resource includes a plurality of time units, and transmitting the target indication information and the target uplink data to the satellite within the time unit included in the second resource for performing the uplink data transmission pre-allocated by the satellite to the terminal includes:
determining, based on a predefined manner, at least one second time unit from the plurality of time units included in the second resource; and
transmitting the target indication information and the target uplink data to the satellite within the at least one second time unit.

Optionally, the target uplink data includes first uplink data that is not transmitted by the terminal within the target time unit; or
the target uplink data includes uplink data obtained by combining the first uplink data and second uplink data, in which the second uplink data needs to be transmitted by the terminal within the time unit included in the first resource.

Optionally, in response to the target uplink data including the uplink data obtained by combining the first uplink data and the second uplink data, the method further includes:
sending association information associated with the target uplink data to the satellite.

Optionally, the association information includes at least one of the followings:
indication information for indicating that a target data packet corresponding to the target uplink data has been transmitted, transmission parameters of the target data packet, or identification information of a data packet corresponding to the first uplink data within the target time unit.

According to a second aspect of embodiments of the disclosure, a method for transmitting data performed by a satellite is provided. The method includes:
configuring, for a terminal, a first resource for transmitting target uplink data in response to receiving target indication information from the terminal, in which the target indication information is configured to indicate that the terminal does not perform an uplink data transmission within a target time unit, and the target time unit is a time unit within which the terminal determines that there is a conflict between an uplink transmission scheduling and an downlink transmission scheduling; and
sending the first resource to the terminal.

Optionally, the method further includes:
receiving the target uplink data transmitted by the terminal within a time unit included in the first resource.

Optionally, the target uplink data includes first uplink data that is not transmitted by the terminal within the target time unit; or
the target uplink data includes uplink data obtained by combining the first uplink data and second uplink data, in which the second uplink data needs to be sent by the terminal within a time unit included in the first resource.

According to a third aspect of embodiments of the disclosure, a method for transmitting data performed by a satellite is provided. The method includes:
receiving target indication information and target uplink data sent by a terminal within a time unit included in a second resource; in which
the second resource is pre-allocated to the terminal for performing an uplink transmission, the time unit included in the second resource is located after a target time unit, the target indication information is configured to indicate that the terminal does not perform an uplink data transmission within the target time unit, and the target time unit is a time unit within which the terminal determines that there is a conflict between an uplink transmission scheduling and a downlink transmission scheduling.

Optionally, the second resource includes a resource used by the terminal for performing a random access.

Optionally, the target uplink data includes first uplink data that is not transmitted by the terminal within the target time unit; or
the target uplink data includes uplink data obtained by combining the first uplink data and second uplink data, in which the second uplink data needs to be transmitted by the terminal within the time unit included in the first resource.

Optionally, in response to the target uplink data including the uplink data obtained by combining the first uplink data and the second uplink data, the method further includes:
receiving association information associated with the target uplink data sent by the terminal.

Optionally, the association information includes at least one of the followings:
indication information for indicating that a target data packet corresponding to the target uplink data has been sent, transmission parameters of the target data packet, or identification information of a data packet corresponding to the first uplink data within the target time unit.

According to a fourth aspect of embodiments of the disclosure, an apparatus for transmitting data applicable to a terminal is provided. The apparatus includes:
a data transmitting module, configured to, perform a downlink data reception or an uplink data transmission within a target time unit in response to determining that there is a conflict between an uplink transmission scheduling and a downlink transmission scheduling within the target time unit,.

According to a fifth aspect of embodiments of the disclosure, an apparatus for transmitting data applicable to a satellite is provided. The apparatus includes:
a resource configuration module, configured to configure, for a terminal, a first resource for transmitting target uplink data in response to receiving target indication information from the terminal, in which the target indication information is configured to indicate that the terminal does not perform an uplink data transmission within a target time unit, and the target time unit is a time unit within which the terminal determines that there is a conflict between an uplink transmission scheduling and a downlink transmission scheduling; and
a sending module, configured to send the first resource to the terminal.

According to a sixth aspect of the embodiments of the disclosure, an apparatus for transmitting data applicable to a satellite is provided. The apparatus includes:
a receiving module, configured to receive target indication information and target uplink data sent by a terminal within a time unit included in a second resource; in which
the second resource is pre-allocated to the terminal for performing an uplink transmission, the time unit included in the second resource is located after a target time unit, the target indication information is configured to indicate that the terminal does not perform an uplink data transmission within the target time unit, and the target time unit is a time unit within which the terminal determines that there is a conflict between an uplink transmission scheduling and a downlink transmission scheduling.

According to a seventh aspect of embodiments of the disclosure, a device for transmitting data is provided. The device includes:
a processor; and
a memory for storing instructions executable by the processor; in which
the processor is configured to perform a method for transmitting data according to the first aspect of the disclosure.

According to an eighth aspect of the embodiments of the disclosure, a device for transmitting data is provided. The device includes:
a processor; and
a memory for storing instructions executable by the processor; in which
the processor is configured to perform a method for transmitting data according to the second aspect or the third aspect of the disclosure.

The technical solutions according to embodiments of the disclosure may include the following beneficial effects.

In the embodiment of the disclosure, the terminal can perform either the downlink data reception or the uplink data transmission within the target time unit in response to determining that there is a conflict between the uplink transmission scheduling and the downlink transmission scheduling within the target time unit. Therefore, the problem that the uplink transmission scheduling and the downlink transmission scheduling conflict in the satellite communication can be effectively solved.

In the embodiment of the disclosure, the terminal can perform either the downlink data reception or the uplink data transmission within the target time unit where there is a conflict between the uplink transmission scheduling and the downlink transmission scheduling, based on the indication of the target transmission mode. Optionally, the terminal can determine the target transmission mode based on the predefined setting or based on the target signaling sent by the satellite Therefore, the problem that the uplink transmission scheduling and the downlink transmission scheduling conflict in the satellite communication can be effectively solved.

In the embodiment of the disclosure, in the case that downlink data reception has been performed within the target time unit, the terminal may send the target indication information to the satellite to inform the satellite that the terminal does not perform the uplink data transmission within the target time unit. The satellite can allocate the first resource to the terminal, and the terminal sends the target uplink data to the satellite through the first resource. The purpose of sending the uplink data that is not sent within the target time unit or sending a combination of the uplink data that is not sent within the target time unit and the uplink data that needs to be sent within the time unit included in the first resource to the satellite, if the downlink data reception is performed within the target time unit where there is a conflict between the uplink transmission scheduling and the downlink transmission scheduling, the normal operation of services of the terminal can be ensured in satellite communication.

In the embodiment of the disclosure, the terminal can also send the target indication information and the target uplink data together to the satellite within the time unit included in the second resource pre-allocated by the satellite for the terminal for performing uplink transmission, which ensures the normal operation of services of the terminal in satellite communication.

It is understandable that the above general description and the following detailed descriptions are illustrative and explanatory only and do not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the technical solutions of the disclosure.
FIG. 1 is a schematic flowchart illustrating a method for transmitting data according to embodiments.
FIG. 2 is a schematic flowchart illustrating another method for transmitting data according to embodiments.
FIG. 3 is a schematic flowchart illustrating another method for transmitting data according to embodiments.
FIG. 4 is a schematic flowchart illustrating another method for transmitting data according to embodiments.
FIG. 5 is a schematic flowchart illustrating another method for transmitting data according to embodiments.
FIG. 6 is a schematic flowchart illustrating another method for transmitting data according to embodiments.
FIG. 7 is a schematic flowchart illustrating another method for transmitting data according to embodiments.
FIG. 8 is a schematic flowchart illustrating another method for transmitting data according to embodiments.
FIG. 9 is a schematic flowchart illustrating another method for transmitting data according to embodiments.
FIG. 10 is a schematic flowchart illustrating another method for transmitting data according to embodiments.
FIG. 11 is a schematic flowchart illustrating another method for transmitting data according to embodiments.
FIG. 12 is a schematic flowchart illustrating another method for transmitting data according to embodiments.
FIG. 13 is a schematic flowchart illustrating another method for transmitting data according to embodiments.
FIG. 14 is a block diagram illustrating an apparatus for transmitting data according to embodiments.
FIG. 15 is a block diagram illustrating another apparatus for transmitting data according to embodiments.
FIG. 16 is a block diagram illustrating another apparatus for transmitting data according to embodiments.
FIG. 17 is a schematic diagram illustrating a device for transmitting data according to embodiments.
FIG. 18 is a schematic diagram illustrating another device for transmitting data according to embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The solution for transmitting data according to the disclosure is described from the terminal side below.

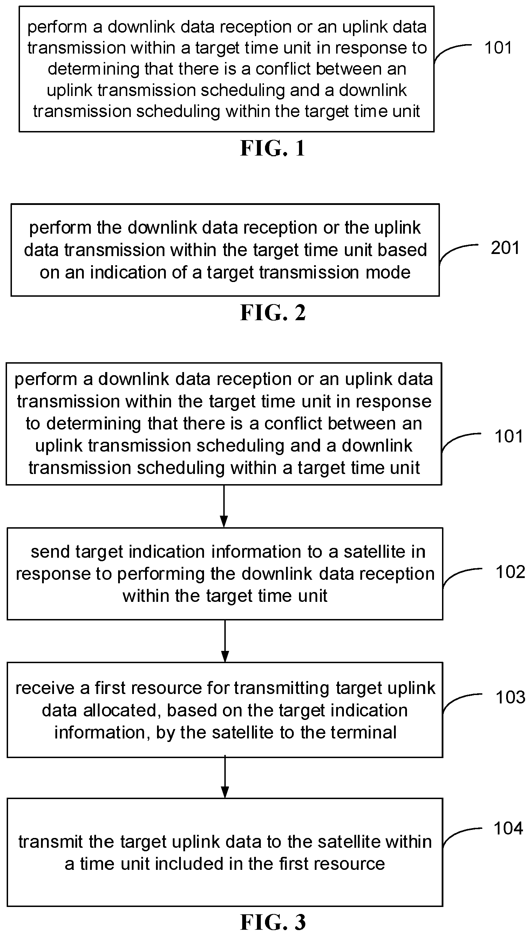

Embodiments of the disclosure provide a method for transmitting data, as illustrated in FIG. 1. FIG. 1 is a schematic flowchart illustrating a method for transmitting data according to embodiments. The method is performed by a terminal. The terminal includes, but is not limited to a terminal supporting half-duplex. Half-duplex means that either uplink data is sent or downlink data is received within a time unit, synchronous data transmission and reception is not supported. The terminal supporting the half-duplex may be a Narrow Band Internet of Things (NB-IoT) device. The method includes the following.

At block 101, data transmission is performed within a target time unit in response to determining that there is a conflict between an uplink transmission scheduling and a downlink transmission scheduling within the target time unit.

The data transmission includes downlink data reception or uplink data transmission.

In embodiment of the disclosure, the target time unit is a time unit within which there is a conflict between the uplink transmission scheduling and the downlink transmission scheduling. The time unit may include, but is not limited to, a slot. The terminal performs either the downlink data reception or the uplink data transmission within the target time unit.

In the above embodiment, the terminal performs the downlink data reception or the uplink data transmission within the target time unit where there is a conflict between the uplink transmission scheduling and the downlink transmission scheduling, which can effectively solve the problem that the uplink transmission scheduling and the downlink transmission scheduling conflict in the satellite communication.

In some embodiments, as illustrated in FIG. 2, FIG. 2 is a schematic flowchart illustrating another method for transmitting data according to embodiments. The method may include the following.

At block 201, the data transmission is performed within the target time unit based on an indication of a target transmission mode.

The data transmission includes the downlink data reception or the uplink data transmission.

In embodiments of the disclosure, the target transmission mode is configured to indicate the terminal to perform the downlink data reception or the uplink data transmission within the target time unit. Within the target time unit where there is a conflict between the uplink transmission scheduling and the downlink transmission scheduling, if the target transmission mode indicates to perform the downlink data reception, then the terminal receives downlink data, and if the target transmission mode indicates to perform the uplink data transmission, then the terminal sends uplink data.

In the above embodiments, either the downlink data reception or the uplink data transmission can be performed based on the indication of the target transmission mode within the target time unit where the uplink transmission scheduling and the downlink transmission scheduling conflict, which solves the problem that there is a conflict between the uplink transmission scheduling and the downlink transmission scheduling in the satellite communication.

In some embodiments, the target transmission mode may be determined according to a predefined setting, such as a protocol agreement.

In the above embodiments, the terminal can determine the target transmission mode based on the predefined setting, so that downlink data reception or the uplink data transmission can be performed based on the indication of the target transmission mode within the target time unit where there is a conflict between the uplink transmission and the downlink transmission scheduling conflict, which solves the problem of the conflict between the uplink transmission scheduling and the downlink transmission scheduling in the satellite communication.

In some embodiments, the target transmission mode can be determined based on a target signaling sent by the satellite. The target signaling includes, but is not limited to, a high-level signaling or a physical layer signaling sent by the satellite. The high-level signaling may include, but is not limited to, a Radio Resource Control (RRC) signaling or a Media Access Control Address (MAC) Control Element (CE) signaling.

In the above embodiments, the terminal can determine the target transmission mode based on the target signaling sent by the satellite, to perform the downlink data reception or the uplink data transmission based on the indication of the target transmission mode within the target time unit where there is an uplink transmission scheduling and the downlink transmission scheduling conflict, which solves the problem of the conflict between the uplink transmission scheduling and the downlink transmission scheduling in the satellite communication.

In some embodiments, FIG. 3 is a schematic flowchart illustrating a method for transmitting data according to embodiments of FIG. 1. As illustrated in FIG. 3, after the block 101, the method may include the following.

At block 102, target indication information is sent to a satellite in response to performing the downlink data reception within the target time unit.

In embodiments of the disclosure, if the terminal abandons the uplink data transmission within the target time unit, the terminal may send the target indication information to the satellite. The target indication information is configured to indicate that the terminal does not perform the uplink data transmission within the target time unit.

At block 103, a first resource allocated, based on the target indication information, by the satellite to the terminal is received. The first resource is configured for transmitting target uplink data

In embodiment of the disclosure, after the satellite receives the target indication information, the satellite can initiate an uplink scheduling signaling as soon as possible, and send the first resource allocated for the terminal to the terminal via the uplink scheduling signaling. After receiving the scheduling signaling, the terminal can determine the first resource indicated by the scheduling signaling. The first resource is configured for transmitting target uplink data, including but not limited to a time-domain resource or a frequency-domain resource.

In an example, the target uplink data includes first uplink data that is not transmitted by the terminal within the target time unit. That is, the first resource allocated, based on the target indication information, by the satellite to the terminal may be used to transmit the first uplink data that is not transmitted within the target time unit.

In another example, the target uplink data includes uplink data obtained by combining the first uplink data and second uplink data. The first uplink data is uplink data that is not transmitted within the target time unit where there is a conflict between an uplink transmission scheduling and a downlink transmission scheduling, and the second uplink data is uplink data that needs to be transmitted by the terminal within a time unit included in the first resource. For example, if the first uplink data includes data A and the second uplink data includes data B, then the target uplink data includes the uplink data obtained by combining the data A and the data B.

At block 104, the target uplink data is transmitted to the satellite within the time unit included in the first resource.

In embodiments of the disclosure, the terminal may send the target uplink data to the satellite within the time unit included in the first resource.

In the above embodiments, after performing the downlink data reception within the target time unit, the terminal can firstly send the target indication information to the satellite to inform the satellite through the target indication information that the terminal does not perform the uplink data transmission within the target time unit, so that the satellite can allocate the first resource to the terminal as soon as possible. The terminal can send the target uplink data that needs to be transmitted to the satellite within the time unit included in the first resource, which further achieves the purpose of sending the target uplink data to the satellite when the uplink data transmission is not performed within the target time unit, thereby ensuring the normal operation of the services of the terminal in the satellite communication scenario.

In some embodiments, for sending the target indication information to the satellite, the terminal can send this target indication information to the satellite through the PRACH, but not limited to the way through the PRACH.

In the above embodiments, the target indication information can be sent to the satellite through the PRACH, which facilitates the satellite to allocate the first resource to the terminal as soon as possible, with easy implementation and high availability.

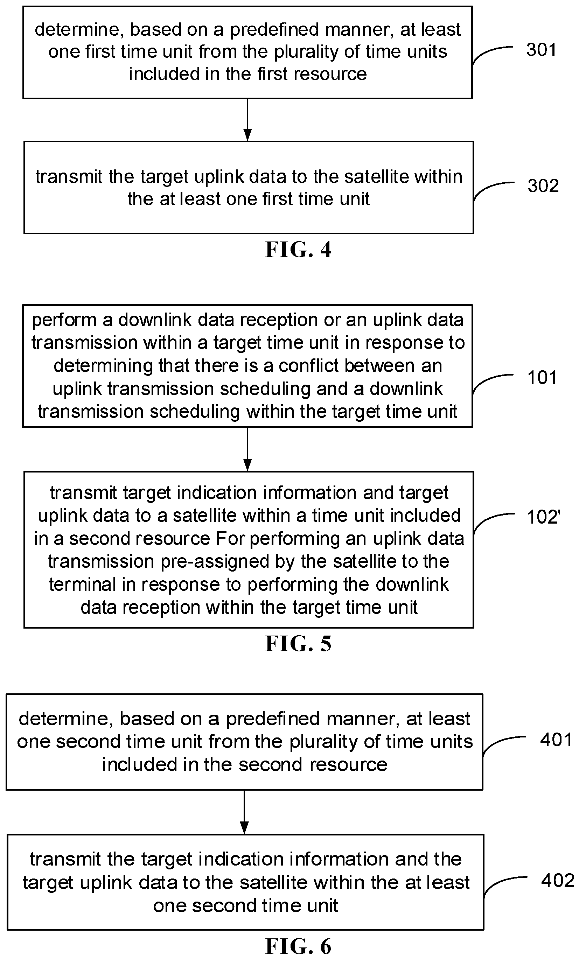

In some embodiments, as illustrated in FIG. 4, FIG. 4 is a schematic flowchart illustrating another method for transmitting data according to embodiments of FIG. 3. In the case where the first resource allocated by the satellite to the terminal via an uplink scheduling signaling includes a plurality of time units, transmitting the target uplink data to the satellite within the time unit included in the first resource may include the following.

At block 301, at least one first time unit is determined from the plurality of time units included in the first resource based on a predefined manner.

In embodiment of the disclosure, the predefined manner includes, but is not limited to, a predefined rule, for example, selecting at least one first time unit that ranks first in time order.

At block 302, the target uplink data is transmitted to the satellite within the at least one first time unit.

In the above embodiments, in the case where the first resource allocated by the satellite includes a plurality of time units, the terminal can determine at least one first time unit from the plurality of time units, so that the target uplink data can be transmitted to the satellite within the at least one first time unit, which ensures the normal operation of services of the terminal in the satellite communication.

In some embodiments, as illustrated in FIG. 5, FIG. 5 is a schematic flowchart illustrating another method for transmitting data according to embodiments of FIG. 1. After the block 101, the method further includes the following.

At block 102', target indication information and target uplink data are transmitted to a satellite within a time unit included in a second resource pre-allocated by the satellite to the terminal. The second resource is configured for perform uplink data transmission.

In embodiment of the disclosure, the time unit included in the second resource is located after the target time unit. That is, the satellite pre-allocates the second resource for performing the uplink data transmission to the terminal, so that the terminal can transmit the target indication information and the target uplink data directly to the satellite within the time unit included in the second resource if determining that there is a conflict between the uplink transmission scheduling and the downlink transmission scheduling within the target time unit and no uplink data transmission is performed within the target time unit.

The target indication information is configured to indicate that the terminal does not perform the uplink data transmission within the target time unit.

In an example, the target uplink data includes first uplink data that is not transmitted by the terminal within the target time unit.

In another example, the target uplink data includes uplink data obtained by combining the first uplink data and second uplink data. The second uplink data is uplink data that needs to be transmitted by the terminal within the time unit included in the first resource.

In the above embodiments, the terminal can transmit the target indication information and the target uplink data together to the satellite within the time unit included in the second resource for performing the uplink transmission pre-allocated by the satellite for the terminal, which ensures the normal operation of the services of the terminal in satellite the communication.

In some embodiments, the second resource may include, but is not limited to, a resource used by the terminal for performing a random access.

In embodiments of the disclosure, the satellite can pre-allocate the resource to be used by the terminal to perform the random access. The pre-allocated resource can be used by the terminal to initiate a random access message. The terminal may send the target indication information and the target uplink data directly to the satellite based on the time unit included in the resource used for performing the random access. The satellite may determine, based on the target indication information, whether the target uplink data is the first uplink data that is not transmitted by the terminal within the target time unit where there is a conflict between an uplink transmission scheduling and the downlink scheduling conflict, or the uplink data obtained by combining the first uplink data and the second uplink data.

The second resource may include, but be not limited to, a resource allocated by the satellite for the terminal for sending msg3 (message 3) or msgB (message B) in the random access process.

In the above embodiments, the terminal can send the target indication information and the target uplink data to the satellite through the second resource pre-allocated by the satellite to the terminal, which ensures the normal operation of the services of the terminal in the satellite communication.

In some embodiments, if the second resource pre-allocated by the satellite for the terminal includes a plurality of time units, as illustrated in FIG. 6 which is a schematic flowchart illustrating another method for transmitting data according to embodiments of FIG. 5, sending the target indication information and the target uplink data to the satellite within the time unit included in the second resource for performing the uplink data transmission pre-allocated by the satellite to the terminal includes the following.

At block 401, at least one second time unit is determined from the plurality of time units included in the second resource based on a predefined manner.

In embodiments of the disclosure, the predefined manner includes, but is not limited to, a predefined rule, for example, selecting at least one second time unit that ranks first in time order.

At block 402, the target indication information and the target uplink data are transmitted to the satellite within the at least one second time unit.

In the above embodiments, in the case the second resource includes a plurality of time units, the terminal can determine at least one second time unit from plurality of time units, so that the target uplink data is transmitted to the satellite within the at least one second time unit, which ensures the normal operation of the services of the terminal in the satellite communication.

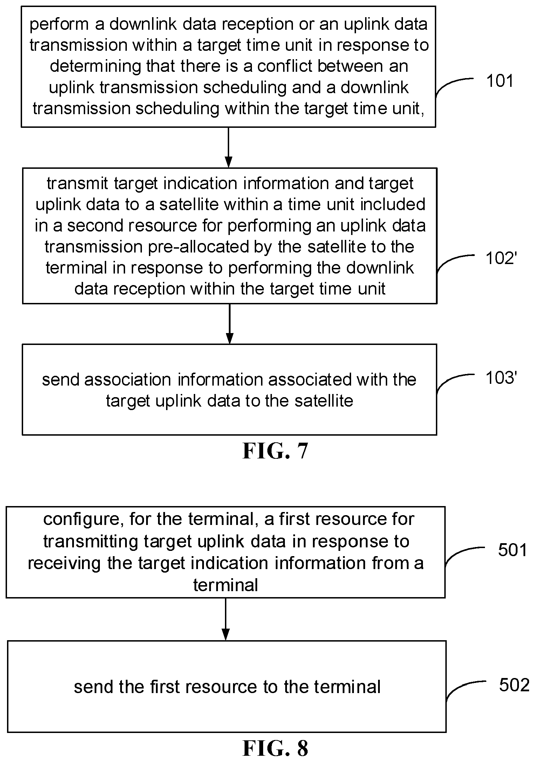

In some embodiments, if the terminal sends the target indication information and the target uplink data to the satellite within the time unit included in the second resource, and the target uplink data includes the uplink data obtained by combining the first uplink data and the second uplink data, then as illustrated in FIG. 7 which is a schematic flowchart illustrating another method for transmitting data according to embodiments of FIG. 5, the method further includes the following.

At block 103', association information associated with the target uplink data is sent to the satellite.

In embodiments of the disclosure, the association information includes, but is not limited to, at least one of the followings: indication information for indicating that a target data packet corresponding to the target uplink data has been sent, transmission parameters of the target data packet, identification information of a data packet corresponding to the first uplink data within the target time unit.

If the terminal sends the target uplink data based on the second resource pre-allocated by the satellite, and the target uplink data includes the uplink data obtained by combining the first uplink data and the second uplink data, the terminal may also send the indication information to the satellite, by which the satellite is informed that the terminal has sent the target data packet corresponding to the target uplink data obtained by combining the first uplink data and the second uplink data.

And/or, the terminal may further send transmission parameters of a target data packet to the satellite, including but not limited to the packet size of the target data packet. And/or, the terminal may further send the identification information of the data packet corresponding to the first uplink data within the target time unit to the satellite, to inform the satellite of the identification information of the data packet that should have been sent within the target time unit.

In the above embodiments, in the case that the terminal sends the target indication information and the target uplink data to the satellite directly through the second resource, and the target uplink data includes the uplink data obtained by combining the first uplink data and the second uplink data, the association information can also be sent to the satellite, to facilitate the satellite to determine the data information of the target uplink data, which ensures the normal operation of the services of the terminal.

The solution for transmitting data on the satellite side according to the disclosure will be described below.

Embodiments of the disclosure provide another method for transmitting data as illustrated in FIG. 8. FIG. 8 is a schematic flowchart illustrating another method for transmitting data according to embodiments. The method is performed by a satellite. The method includes the following.

At block 501, a first resource for transmitting target uplink data is configured for a terminal in response to receiving target indication information from the terminal.

The target indication information is configured to indicate that the terminal does not perform uplink data transmission within a target time unit, and the target time unit is a time unit within which the terminal determines that there is a conflict between an uplink transmission scheduling and a downlink transmission scheduling.

After receiving the target indication information, the satellite may configure the first resource for transmitting the target uplink data for the terminal as soon as possible.

At block 502, the first resource is sent to the terminal.

In embodiments of the disclosure, the satellite may send the first resource to the terminal through an uplink scheduling signaling.

In the above embodiments, after receiving the target indication information sent by the terminal, the satellite can allocate and send the first resource to the terminal, so that the terminal can transmit the target uplink data to the satellite within the time unit included in the first resource, which solves the problem that the uplink transmission scheduling and the downlink transmission scheduling conflict in the satellite communication, and ensures the normal operation of the services of the terminal.

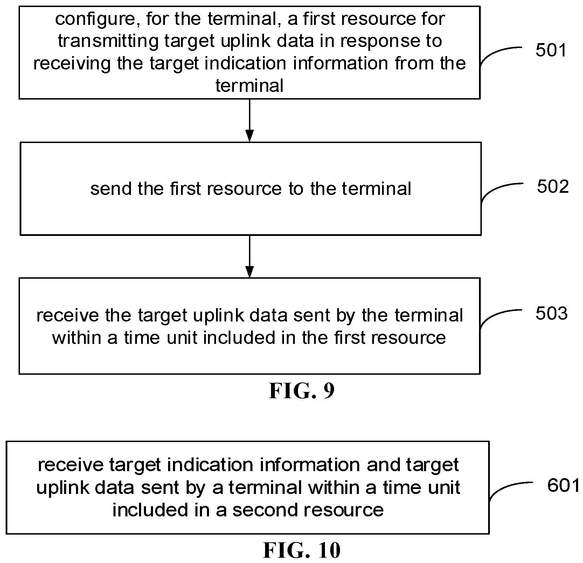

In some embodiments, as illustrated in FIG. 9 which is a schematic flowchart illustrating a method for transmitting data according to embodiments of FIG. 8, the method includes the following.

At block 503, the target uplink data transmitted by the terminal within a time unit included in the first resource is received.

In the above embodiments, after allocating the first resource to the terminal, the satellite can receive the target uplink data sent by the terminal within the time unit included in the first resource, which ensures the normal operation of the services of the terminal.

In some embodiments, the target uplink data may include first uplink data that is not transmitted by the terminal within the target time unit.

Or, the target uplink data includes the uplink data obtained by combining the first uplink data and the second uplink data. The second uplink data is the uplink data that needs to be transmitted by the terminal within the time unit included in the first resource.

In the above embodiments, the first resource allocated, based on the target indication information, by the satellite to the terminal can be used to transmit the first uplink data that is not transmitted by the terminal within the target time unit. Or, the first resource is also used to transmit the uplink data obtained by combining the first uplink data and the second uplink data, thereby improving the usability.

Embodiments of the disclosure provide another method for transmitting data as shown in FIG. 10 which is a schematic flowchart of another method for transmitting data according to embodiments. The method is performed by a satellite. The method includes the following.

At block 601, target indication information and target uplink data sent by a terminal within a time unit included in a second resource is received.

In embodiments of the disclosure, the second resource is pre-allocated to the terminal for performing the uplink transmission, and the time unit included in the second resource is located after the target time unit. The target indication information is configured to indicate that the terminal does not perform an uplink data transmission within a target time unit. The target time unit is a time unit within which the terminal determines that there is a conflict between an uplink transmission scheduling and a downlink transmission scheduling. The satellite can directly receive the target indication information and the target uplink data sent by the terminal within the time unit included in the second resource.

In the above embodiments, the satellite can directly receive the target indication information and the target uplink data sent by the terminal through the pre-allocated second resource, which solves the problem of the conflict between the uplink transmission scheduling and the downlink transmission scheduling in the satellite communication and ensures the normal operation of the services of the terminal.

In some embodiments, the second resource may include, but is not limited to, a resource used by the terminal to perform a random access. The second resource may include, but is not limited to, a resources allocated by the satellite to the terminal for sending the msg3 (message 3) or msgB (message B) in the random access process.

In the above embodiments, the satellite can receive the target indication information and the target uplink data transmitted by the terminal within the time unit included in the resource used for performing the random access, which is easy to implement and highly usable.

In some embodiments, the target uplink data may include first uplink data that is not transmitted by the terminal within the target time unit.

Or, the target uplink data includes uplink data obtained by combining the first uplink data and the second uplink data. The second uplink data is the uplink data that needs to be transmitted by the terminal within the time unit included in the first resource.

In the above embodiments, the satellite can receive, through the second resource pre-allocated by the terminal, the first uplink data that is not transmitted by the terminal within the target time unit, or the uplink data obtained by combining the first uplink data and the second uplink data, to improve the usability.

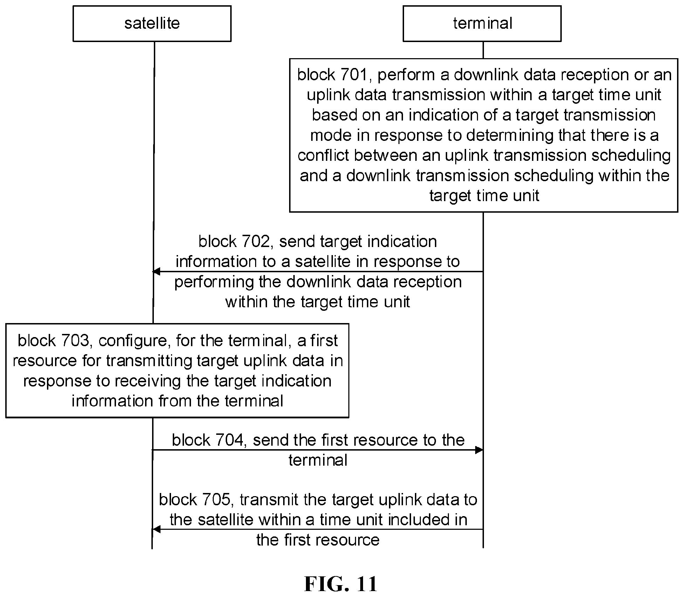

In some embodiments, as illustrated in FIG. 11 which is a schematic flowchart illustrating another method for transmitting data according to embodiments, the method includes the following.

At block 701, the terminal performs data transmission within a target time unit based on an indication of a target transmission mode in response to determining that there is a conflict between an uplink transmission scheduling and a downlink transmission scheduling within a target time unit,. The data transmission includes a downlink data reception or an uplink data transmission.

At block 702, the terminal sends target indication information to a satellite in response to performing the downlink data reception within the target time unit.

The target indication information is configured to indicate that the terminal does not perform the uplink data transmission within the target time unit. Or, the terminal may send the target indication information to the satellite via the PRACH.

At block 703, the satellite configures a first resource for transmitting target uplink data for the terminal in response to receiving the target indication information from the terminal.

In an example, the target uplink data includes first uplink data that is not transmitted by the terminal within the target time unit.

In another example, the target uplink data includes uplink data obtained by combining the first uplink data and the second uplink data. The second uplink data is the uplink data that needs to be transmitted by the terminal within the time unit included in the first resource.

At block 704, the satellite sends the first resource to the terminal.

In some examples, the satellite may send the first resource to the terminal via an uplink scheduling signaling.

At block 705, the terminal sends the target uplink data to the satellite within the time unit included in the first resource.

If the first resource includes a plurality of time units, the terminal may determine, based on a predefined manner, at least one first time unit from the plurality of time units included in the first resource. The terminal transmits the target uplink data to the satellite within the at least one first time unit.

The above embodiments effectively solve the problem of the conflict between the uplink transmission scheduling and downlink transmission scheduling in the satellite communication, while ensuring the normal operation of services of the terminal.

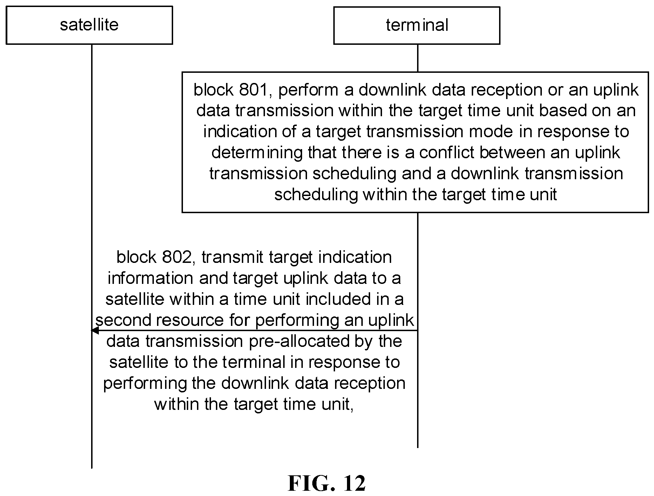

In some embodiments, as illustrated in FIG. 12 which is a schematic flowchart illustrating a method for transmitting data according to embodiments, the method may include the following.

At block 801, the terminal performs data transmission (i.e., either the downlink data reception or the uplink data transmission) within the target time unit based on an indication of a target transmission mode in response to determining that there is a conflict between an uplink transmission scheduling and a downlink transmission scheduling within a target time unit,.

At block 802, the terminal transmits target indication information and target uplink data to a satellite within a time unit included in a second resource for performing uplink data transmission pre-allocated by the satellite to the terminal in response to performing the downlink data reception within the target time unit,.

In embodiments of the disclosure, the time unit included in the second resource is located after the target time unit, and the target indication information is configured to indicate that the terminal does not perform the uplink data transmission within the target time unit. Or, the second resource includes a resource used by the terminal to perform a random access.

If the second resource includes a plurality of time units, the terminal may determine at least one second time unit from the plurality of time units included in the second resource based on the predefined manner. Further, the terminal transmits the target uplink data to the satellite within the at least one second time unit.

In an example, the target uplink data includes the first uplink data that is not transmitted by the terminal within the target time unit.

The above embodiments effectively solve the problem of the conflict between the uplink transmission scheduling and the downlink transmission scheduling in the satellite communication, while ensuring the normal operation of services of the terminal.

In some embodiments, the target uplink data includes uplink data obtained by combining the first uplink data and the second uplink data. The second uplink data is the uplink data that needs to be transmitted by the terminal within the time unit included in the first resource.

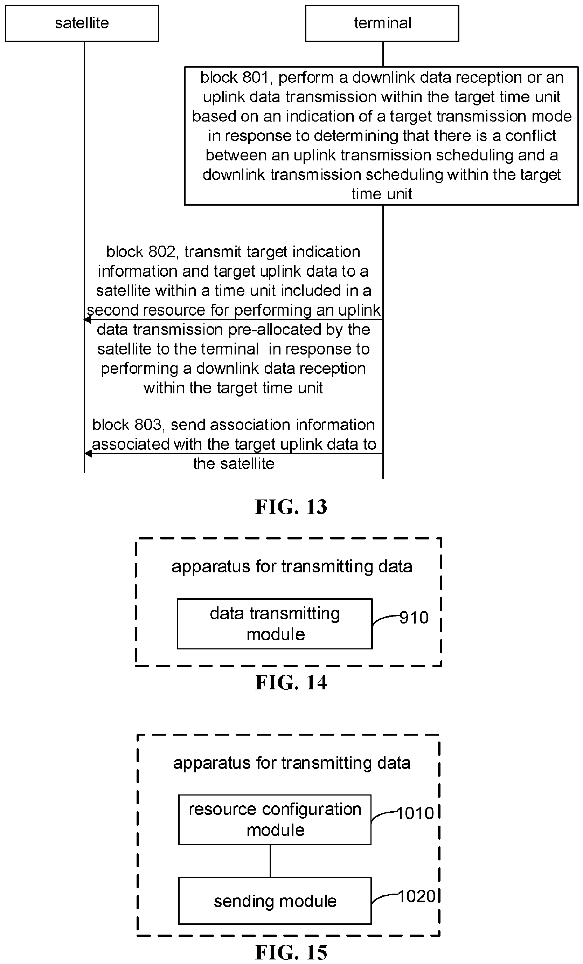

Correspondingly, as illustrated in FIG. 13 which is a schematic flowchart of another method for transmitting data according to embodiments of FIG. 12, the method further includes the following.

At block 803, association information associated with the target uplink data is sent to the satellite.

In embodiments of the disclosure, the association information includes at least one of the followings: indication information for indicating that a target data packet corresponding to the target uplink data has been sent, transmission parameters of the target data packet, identification information of a data packet corresponding to the first uplink data within the target time unit.

The above embodiments effectively solve the problem of the conflict between the uplink transmission scheduling and the downlink transmission scheduling in the satellite communication, while ensuring the normal operation of services of the terminal.

In some embodiments, the satellite may send the indication information to the terminal in response to determining that there may be a conflict between the uplink transmission scheduling and the downlink transmission scheduling within the target time unit. The indication information indicates the terminal to perform the downlink data reception or the uplink data if determining that the uplink transmission scheduling and the downlink transmission scheduling conflict within the target time unit. The terminal may perform the downlink data reception or the uplink data transmission directly based on the indication information sent by the satellite.

In some examples, the indication information may include, but is not limited to, a slot Format Indicator (SFI).

In an example, if this indication information sent by the satellite indicates that the transmission mode of the terminal on at least one downlink bandwidth portion is a specified transmission mode, the terminal can perform the uplink data transmission and abandon the downlink data reception within the target time unit.

If the second target indication information indicates that the transmission mode of the terminal on at least one uplink bandwidth portion is a specified transmission mode, the terminal may perform the downlink data reception and abandon the uplink data transmission within the target time unit.

In an example, the specified transmission mode may be a preset transmission mode on the target time unit, for example, the specified transmission mode may be denoted by "F" .

In the above embodiments, the terminal performs the uplink data transmission within the target time unit based on the indication information sent by the satellite and does not perform the downlink data reception. Or, the terminal can perform the downlink data reception within the target time unit based on the indication information sent by the satellite and does not perform the uplink data transmission. Therefore, the problem of the conflict between the uplink transmission scheduling and the downlink transmission scheduling in the satellite communication can be effectively solved.

Corresponding to the aforementioned application function implementation method embodiments, the disclosure also provides embodiments of application function implementation devices.

As illustrated in FIG. 14 which is a block diagram illustrating an apparatus for transmitting data according to embodiments. The apparatus is applicable to a terminal. The apparatus includes a data transmitting module 910.

The data transmitting module 910 is configured to perform a data transmission (i.e., either a downlink data reception or an uplink data transmission) within a target time unit , in response to determining that there is a conflict between an uplink transmission scheduling and a downlink transmission scheduling within the target time unit,.

As illustrated in FIG. 15 which is a block diagram illustrating an apparatus for transmitting data according to embodiments. The apparatus is applicable to a satellite. The apparatus includes a resource configuration module 1010 and a sending module 1020.

The resource configuration module 1010 is configured to configure a first resource for transmitting target uplink data for a terminal, in response to receiving target indication information from the terminal, in which the target indication information is configured to indicate that the terminal does not perform a uplink data transmission within a target time unit, and the target time unit is a time unit within which the terminal determines that there is a conflict between an uplink transmission scheduling and a downlink transmission scheduling.

The sending module 1020 is configured to send the first resource to the terminal.

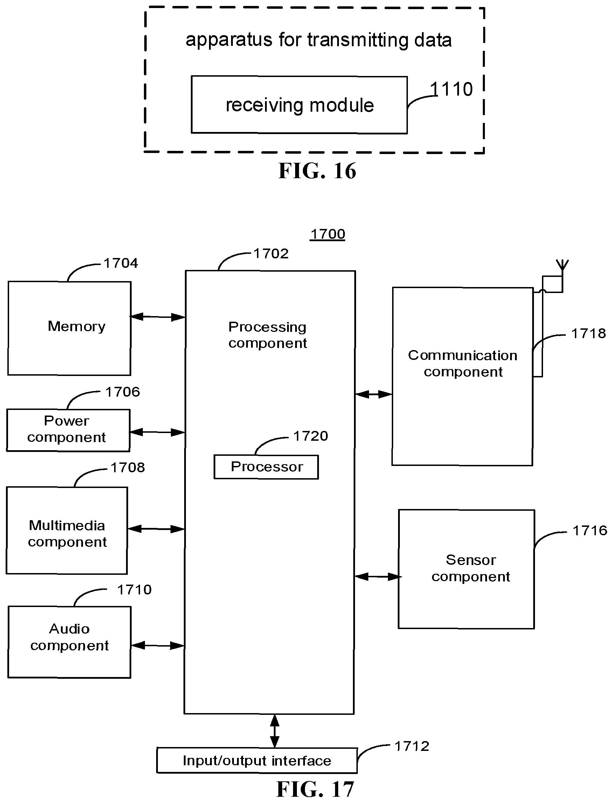

As illustrated in FIG. 16 which is a block diagram of an apparatus for transmitting data according to embodiments. The apparatus is applicable to a satellite. The apparatus includes a receiving module 1110.

The receiving module 1110 is configured to receive target indication information and target uplink data sent by a terminal within a time unit included in a second resource.

The second resource is pre-allocated to the terminal for performing a uplink transmission, the time unit included in the second resource is located after a target time unit, the target indication information is configured to indicate that the terminal does not perform an uplink data transmission within a target time unit, and the target time unit is a time unit within which the terminal determines that there is a conflict between an uplink transmission scheduling and a downlink transmission scheduling.

The apparatus embodiments basically correspond to the method embodiments, the related contents can refer to part of the descriptions of the method embodiments. The above-described apparatus embodiments are merely schematic, the units described above as separate components may or may not be physically separated, and the components displayed as units may or may not be physical units, i.e., the components may be located in one area or may be distributed to multiple network units. Some or all of these modules can be selected according to practical needs to achieve the purpose of the solution of the disclosure. Those skilled in the art can understand and implement the solution without inventive works.

Correspondingly, the disclosure further provides a computer readable storage medium having a computer program stored thereon. The computer program is configured to perform any method for transmitting data described above on the terminal side.

Correspondingly, the disclosure further provides a computer readable storage medium having a computer program stored thereon. The computer program is configured to perform any method for transmitting data described above on the satellite side.

Correspondingly, the disclosure also provides a device for transmitting data. The device includes:
a processor; and
a memory for storing instructions executable by the processor; in which
the processor is configured to perform any of the above methods for transmitting data on the terminal side.

FIG. 17 is a block diagram illustrating an electronic device 1700 according to embodiments. For example, the electronic device 1700 may be a cell phone, a tablet computer, an e-book reader, a multimedia playback device, a wearable device, an in-vehicle terminal, an ipad, a smart TV, and other terminals.

As illustrated in FIG. 17, the electronic device 1700 may include at least one of the following components: a processing component 1702, a memory 1704, a power component 1706, a multimedia component 1708, an audio component 1710, an input/output (I/O) interface 1712, a sensor component 1716, and a communication component 1718.

The processing component 1702 typically controls overall operations of the electronic device 1700, such as the operations associated with display, telephone calls, data communications, camera operations, and recording operations. The processing component 1702 may include one or more processors 1720 to perform all or part of the steps in the above described method. Moreover, the processing component 1702 may include one or more modules which facilitate the interaction between the processing component 1702 and other components. For example, the processing component 1702 may include a multimedia module to facilitate the interaction between the multimedia component 1708 and the processing component 1702. For another example, the processing component 1702 may read executable instructions from the memory, to implement the steps of the method for transmitting data provided in the above embodiments.

The memory 1704 is configured to store various types of data to support the operation of the electronic device 1700. Examples of such data include instructions for any applications or methods operated on the electronic device 1700, contact data, phonebook data, messages, pictures, video, or other situations. The memory 1704 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1706 provides power to various components of the electronic device 1700. The power component 1706 may include a power management system, one or more power sources, and any other components associated with the generation, management, and distribution of power in the electronic device 1700.

The multimedia component 1708 includes a screen providing an output interface between the electronic device 1700 and the user. In some embodiments, the multimedia component 1708 includes a front-facing camera and/or a rear-facing camera. When the electronic device 1700 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1710 is configured to output and/or input audio signals. For example, the audio component 1710 includes a microphone (MIC) configured to receive an external audio signal when the electronic device 1700 is in an operation mode, such as a call mode, a recording mode, and a voice recognition mode. The received audio signal may be further stored in the memory 1704 or transmitted via the communication component 1718. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1716 includes one or more sensors to provide status assessments of various aspects of the electronic device 1700. For instance, the sensor component 1714 may detect an open/closed status of the electronic device 1700, relative positioning of components, e.g., the display and the keypad, of the electronic device 1700, a change in position of the electronic device 1700 or a component of the electronic device 1700, a presence or absence of user contact with the electronic device 1700, an orientation or an acceleration/deceleration of the electronic device 1700, and a change in temperature of the electronic device 1700. The sensor component 1716 may include a proximity sensor configured to detect the presence of nearby objects without any physical contact. The sensor component 1716 may also include a light sensor, such as a Complementary Metal Oxide Semiconductor (CMOS) or Charge-Coupled Device (CCD) image sensor, for use in imaging applications. In some embodiments, the sensor component 1716 may also include an accelerometer sensor, a gyroscope sensor, a magnetic sensor, a pressure sensor, or a temperature sensor.

The communication component 1718 is configured to facilitate communication, wired or wirelessly, between the electronic device 1700 and other devices. The electronic device 1700 can access a wireless network based on a communication standard, such as Wi-Fi, 2G, 3G, 4G, 5G or 6G, or a combination thereof. In an embodiment, the communication component 1718 receives a broadcast signal or broadcast associated information from an external broadcast management system via a broadcast channel. In an embodiment, the communication component 1718 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the embodiment, the electronic device 1700 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the method for transmitting data described above on the terminal side.

In embodiments, there is also provided a non-transitory computer readable storage medium including executable instructions, such as the memory 1704, executable by the processor 1720 in the electronic device 1700, for performing the above method for transmitting data. For example, the non-transitory computer-readable storage medium may be a ROM, a Random Access Memory (RAM), a CD-ROM, a magnetic tape, a floppy disc, and an optical data storage device.

Correspondingly, the disclosure also provides a device for transmitting data. The device includes:
a processor; and
a memory for storing instructions executable by the processor; in which
the processor is configured to perform any of the above methods for transmitting data on the satellite side.

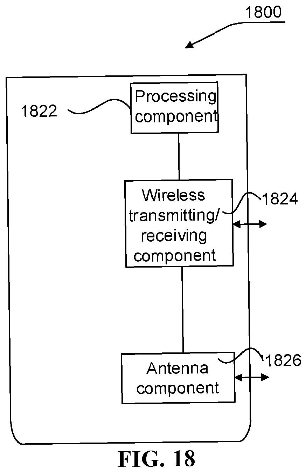

As illustrated in FIG. 18, FIG. 18 is a schematic diagram of a device 1800 for transmitting data according to embodiments. The device 1800 may be provided as a satellite. As illustrated in FIG. 18, the device 1800 includes a processing component 1822, a wireless transmitting/receiving component 1824, an antenna component 1826, and a signal processing portion specific to the wireless interface. The processing component 1822 may further include one or more processors.

One of the processors in the processing component 1822 may be configured to perform the method for transmitting data described above on the satellite side.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for transmitting data, performed by a terminal, the method comprising:
performing a data transmission within a target time unit in response to determining that there is a conflict between an uplink transmission scheduling and a downlink transmission scheduling within the target time unit.

2. The method of claim 1, wherein performing the data transmission within the target time unit comprises:
performing the data transmission within the target time unit based on an indication of a target transmission mode.

3. The method of claim 2, wherein the target transmission mode is determined by:
a predefined setting; or
a target signaling sent by a satellite.

4. The method of claim 1, further comprising:
sending target indication information to a satellite in response to performing a downlink data reception within the target time unit, wherein the target indication information is configured to indicate that the terminal does not perform an uplink data transmission within the target time unit;
receiving a first resource for transmitting target uplink data allocated, based on the target indication information, by the satellite to the terminal; and
transmitting the target uplink data to the satellite within a time unit included in the first resource.

5. The method of claim 4, wherein sending the target indication information to the satellite comprises:
sending the target indication information to the satellite via a Physical Random Access Channel (PRACH).

6. The method of claim 4, wherein the first resource comprises a plurality of time units, and wherein transmitting the target uplink data to the satellite within the time unit included in the first resource comprises:
determining, based on a predefined manner, at least one first time unit from the plurality of time units included in the first resource; and
transmitting the target uplink data to the satellite within the at least one first time unit.

7. The method of claim 4, wherein the target uplink data comprises first uplink data that is not transmitted by the terminal within the target time unit; or
the target uplink data comprises uplink data obtained by combining the first uplink data and second uplink data, wherein the second uplink data needs to be transmitted by the terminal within the time unit included in the first resource.

8. The method of claim 1, further comprising:
transmitting target indication information and target uplink data to a satellite within a time unit included in a second resource for performing uplink data transmission pre-allocated by the satellite to the terminal, in response to performing a downlink data reception within the target time unit, wherein the time unit included in the second resource is located after the target time unit, and the target indication information is configured to indicate that the terminal does not perform an uplink data transmission within the target time unit.

9. The method of claim 8, wherein the second resource comprises a resource used by the terminal for performing a random access.

10. The method of claim 8, wherein the second resource comprises a plurality of time units, and transmitting the target indication information and the target uplink data to the satellite within the time unit included in the second resource for performing the uplink data transmission pre-allocated by the satellite to the terminal comprises:
determining, based on a predefined manner, at least one second time unit from the plurality of time units included in the second resource; and
transmitting the target indication information and the target uplink data to the satellite within the at least one second time unit.

11. The method of claim 8, wherein the target uplink data comprises first uplink data that is not transmitted by the terminal within the target time unit; or
the target uplink data comprises uplink data obtained by combining the first uplink data and second uplink data, wherein the second uplink data needs to be transmitted by the terminal within the time unit included in the first resource.

12. The method of claim 11, wherein in response to the target uplink data comprising the uplink data obtained by combining the first uplink data and the second uplink data, the method further comprises:
sending association information associated with the target uplink data to the satellite.

13. The method of claim 12, wherein the association information comprises at least one of the followings:
indication information for indicating that a target data packet corresponding to the target uplink data has been transmitted, transmission parameters of the target data packet, or identification information of a data packet corresponding to the first uplink data within the target time unit.

14. A method for transmitting data, performed by a satellite, the method comprising:
configuring, for a terminal, a first resource for transmitting target uplink data in response to receiving target indication information from the terminal, wherein the target indication information is configured to indicate that the terminal does not perform an uplink data transmission within a target time unit, and the target time unit is a time unit within which the terminal determines that there is a conflict between an uplink transmission scheduling and an downlink transmission scheduling; and
sending the first resource to the terminal.

15. The method of claim 14, further comprising:
receiving the target uplink data transmitted by the terminal within a time unit included in the first resource.

16. The method of claim 14 or 15, wherein the target uplink data comprises first uplink data that is not transmitted by the terminal within the target time unit; or
the target uplink data comprises uplink data obtained by combining the first uplink data and second uplink data, wherein the second uplink data needs to be sent by the terminal within a time unit included in the first resource.

17. A method for transmitting data, performed by a satellite, the method comprising:
receiving target indication information and target uplink data sent by a terminal within a time unit included in a second resource;
wherein, the second resource is pre-allocated to the terminal for performing an uplink transmission, the time unit included in the second resource is located after a target time unit, the target indication information is configured to indicate that the terminal does not perform an uplink data transmission within the target time unit, and the target time unit is a time unit within which the terminal determines that there is a conflict between an uplink transmission scheduling and a downlink transmission scheduling.

18. The method of claim 17, wherein the second resource comprises a resource used by the terminal for performing a random access.

19. The method of claim 17 or 18, wherein the target uplink data comprises first uplink data that is not transmitted by the terminal within the target time unit; or
the target uplink data comprises uplink data obtained by combining the first uplink data and second uplink data, wherein the second uplink data needs to be transmitted by the terminal within the time unit included in the first resource.

20. The method of claim 19, wherein in response to the target uplink data comprising the uplink data obtained by combining the first uplink data and the second uplink data, the method further comprises:
receiving association information associated with the target uplink data sent by the terminal.

21. The method of claim 20, wherein the association information comprises at least one of the followings:
indication information for indicating that a target data packet corresponding to the target uplink data has been sent, transmission parameters of the target data packet, or identification information of a data packet corresponding to the first uplink data within the target time unit.

22. An apparatus for transmitting data, applicable to a terminal, the apparatus comprising:
a data transmitting module, configured to perform a downlink data reception or an uplink data transmission within a target time unit in response to determining that there is a conflict between an uplink transmission scheduling and a downlink transmission scheduling within the target time unit.

23. An apparatus for transmitting data, applicable to a satellite, the apparatus comprising:
a resource configuration module, configured to configure, for a terminal, a first resource for transmitting target uplink data in response to receiving target indication information from the terminal, in which the target indication information is configured to indicate that the terminal does not perform an uplink data transmission within a target time unit, and the target time unit is a time unit within which the terminal determines that there is a conflict between an uplink transmission scheduling and a downlink transmission scheduling; and
a sending module, configured to send the first resource to the terminal.

24. An apparatus for transmitting data, applicable to a satellite, the apparatus comprising:
a receiving module, configured to receive target indication information and target uplink data sent by a terminal within a time unit included in a second resource;
wherein the second resource is pre-allocated to the terminal for performing an uplink transmission, the time unit included in the second resource is located after a target time unit, the target indication information is configured to indicate that the terminal does not perform an uplink data transmission within the target time unit, and the target time unit is a time unit within which the terminal determines that there is a conflict between an uplink transmission scheduling and a downlink transmission scheduling.

25. A device for transmitting data, comprising:
a processor; and
a memory for storing instructions executable by the processor;
wherein the processor is configured to perform a method for transmitting data of any one of claims 1 to 13.

26. A device for transmitting data, comprising:
a processor; and
a memory for storing instructions executable by the processor;
wherein the processor is configured to perform a method for transmitting data of any one of claims 14 to 16 or 17 to 21.
